# EUROPEAN PATENT APPLICATION

(11) **EP 4 265 770 A1**
(43) Date of publication of application: **25.10.2023**
(21) Application number: 21907053.9
(22) Date of filing: 14.12.2021
(51) Int. Cl.: C22C 38/02, C22C 38/04, C22C 38/14, C21D 9/52, C21D 8/06

(54) **WIRE ROD AND PART, HAVING IMPROVED DELAYED FRACTURE RESISTANCE, FOR USE IN BOLT AND METHOD FOR MANUFACTURING SAME**

(30) Priority: 18.12.2020 KR 20200178277
(71) Applicant: POSCO Co., Ltd, Pohang-si, Gyeongsangbuk-do 37859 (KR)
(72) Inventor: CHUN, Youngsoo, Pohang-si, Gyeongsangbuk-do 37669 (KR); CHOI, Seok-hwan, Pohang-si, Gyeongsangbuk-do 37669 (KR); KIM, Kyoungsik, Incheon 21995 (KR); CHOI, Myungsoo, Pohang-si, Gyeongsangbuk-do 37669 (KR)
(74) Representative: Nederlandsch Octrooibureau
(86) International application number: PCT/KR2021/018972
(87) International publication number: WO 2022/131749

(57) **Abstract**

Disclosed are high-strength wire rods and parts, having improved delayed fracture resistance, for use in bolts, and a methods for manufacturing the same. The high-strength wire rod, having improved delayed fracture resistance, for use in bolts according to the present disclosure contains, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance.

## Description

### [Technical Field]

The present disclosure relates to a wire rod and a part that can be used in fastening bolts, etc. for automobiles and structures, more specifically to a wire rod and a part, having improved delayed fracture resistance, for a bolt and methods for manufacturing the same.

### [Background Art]

High strength is required for wire rods which are used for fastening bolts, etc. for automobiles and structures with the weight reduction and miniaturization of automobiles and structures. In general, cold working, grain refinement, martensite strengthening, precipitation strengthening, etc. are utilized to increase the strength of steel materials.

However, the dislocations, grain boundaries, martensite lath boundaries, fine precipitate boundaries, used for strengthening lead to inferior delayed fracture by acting as hydrogen traps in steel materials. For this reason, the delayed fracture becomes inferior in high-strength bolts with a tensile strength of 1 GPa or higher.

In order to solve this problem, Cr-Mo alloy steel with Mo added was used in steel for high-strength bolts with a tempered martensite structure having a tensile strength of 1 GPa or higher. But, there have been attempts to replace the Cr-Mo steel with Cr-B steel in order to respond to the need for cost reduction with the development of the bolt manufacturing technology. As a result, cost reduction was realized by using Cr-B steel for bolts used in structures with no significant impact on safety. Then, after its safety was confirmed, the Cr-B steel is used for some fastening bolts of automobiles.

Furthermore, in the automobile industry, there is a need to develop a material for bolts that can reduce cost more than the Cr-B steel. In order to respond to this need, technological development has been conducted recently to apply Mn-B steel utilizing Mn, which is cheaper than Cr, for high-strength bolts of 1 GPa or higher.

However, it is difficult to use the Mn-B steel for high-strength bolts of 1 GPa or higher because Mn causes deviations during heat treatment in a continuous steel casting process due to severe alloy element segregation and inferior delayed fracture resistance due to structural imbalance occurring during the heat treatment, as compared to Cr.

### [Disclosure]

### [Technical Problem]

In an aspect, the present disclosure is directed to providing a wire rod, having improved delayed fracture resistance, for a bolt, a high-strength bolt and methods for manufacturing the same, which allow cost reduction by controlling of the microstructure of Mn-B steel through of alloy composition and manufacturing method.

### [Technical Solution]

In an exemplary embodiment of the present disclosure, a wire rod, having improved delayed fracture resistance, for a bolt may contain, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance.

In another exemplary embodiment of the present disclosure, a part, having improved delayed fracture resistance, for a bolt may contain, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance, and may include, by volume fraction, 0.3-2.0% of a retained austenite structure and a residual tempered martensite structure.

In another exemplary embodiment of the present disclosure, a method for manufacturing a wire rod, having improved delayed fracture resistance, for a bolt may include a step of finish-rolling a steel material containing, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance at 880-980 °C; and a step of winding at 830-930 °C.

In another exemplary embodiment of the present disclosure, a method for manufacturing a part, having improved delayed fracture resistance, for a bolt may include: a step of forming a wire rod, having improved delayed fracture resistance, for a high-strength bolt into a part; an austenitization step of heating at 870-940 °C; a step of quenching at 50-80 °C; and a step of obtaining a part by tempering at 400-600 °C.

### [Advantageous Effects]

A part, having improved delayed fracture resistance, for a high-strength bolt according to an exemplary embodiment of the present disclosure may have improved delayed fracture resistance since retained austenite is formed at a martensite lath boundary and, thus, the diffusion of hydrogen in a steel material is delayed.

### [Brief Description of Drawings]

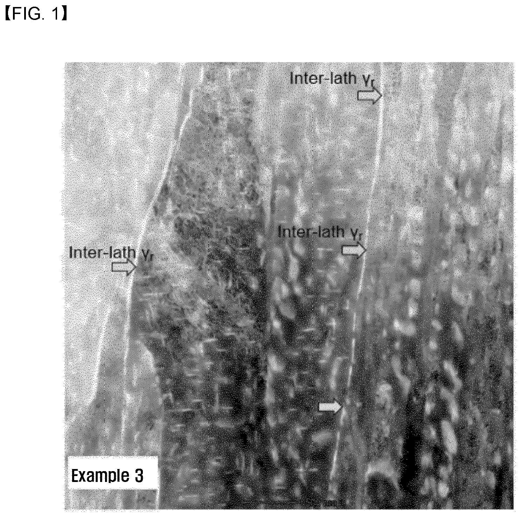

FIG. 1 is a transmission electron microscopic (TEM) image showing the fraction and thickness of retained austenite of Example 3.

### [Best Mode]

The present specification does not describe all elements of exemplary embodiments, and the description of general contents in the technical field to which the present disclosure belongs or contents overlapping between exemplary embodiments is omitted.

In addition, when a part is described to "include" a certain component, it means that it may further include other components rather than excluding other components, unless stated otherwise.

Singular expressions include plural expressions unless the context clearly indicates otherwise.

Hereinafter, the present disclosure is described in detail.

The inventors of the present disclosure have found out that the delayed fracture resistance of Mn-B steel, which has relatively inferior delayed fracture resistance due to structural imbalance caused by the segregation of Mn by utilizing a retained austenite structure with slow hydrogen diffusion rate, may be secured, and have completed the present disclosure.

Retained austenite is formed at a lath boundary, which is formed as austenite is phase-transformed into martensite, since the mechanically stable austenite cannot be transformed into martensite lath. The retained austenite formed at the martensite lath boundary has a face-centered cubic (FCC) lattice structure and exhibits about 10,000 times slower hydrogen diffusion rate as compared to a tempered martensite structure having a body-centered cubic (BCC) or body-centered tetragonal (BCT) lattice structure. Accordingly, delayed fracture resistance may be improved since the diffusion rate of hydrogen introduced into steel is decreased when it meets retained austenite.

A high-strength wire rod, having improved delayed fracture resistance, for a bolt according to an exemplary embodiment of the present disclosure contains, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance.

The reason why the contents of the alloy elements are limited will be described in detail. The content is in wt% unit unless specified otherwise.

The content of carbon (C) is 0.15-0.30%.

C is an element added to ensure the strength of a product. If the carbon content is less than 0.15%, it is difficult to ensure the target strength. And, if it exceeds 0.30%, the formation of retained austenite with superior mechanical stability may be hindered by the hydrostatic pressure formed at the lath martensite during quenching. In addition, the lath becomes thicker and the thickness of retained austenite is increased as the C content is higher. Because the thickened retained austenite can act as a trap wherein hydrogen is accumulated, the delayed fracture characteristics may become inferior. Therefore, in the present disclosure, the C content is limited to 0.15-0.30%.

The content of silicon (Si) is 0.05-0.35%.

Si is an element that is used not only for deoxidization of steel but also for ensuring strength through solid solution strengthening. If the Si content is less than 0.05%, the deoxidization of steel and improvement of strength through solid solution strengthening may be insufficient. And, if it exceeds 0.35%, delayed fracture resistance may become inferior due to deterioration of impact characteristics. Therefore, in the present disclosure, the Si content is limited to 0.05-0.35%.

The content of manganese (Mn) is 0.95-1.35%.

Mn is an element which improves hardenability. It is a very useful element that provides solid solution strengthening effect by forming a substitutional solid solution in the matrix structure. If the Mn content is less than 0.95%, it is difficult to ensure the strength desired in the present disclosure because the solid solution strengthening effect and hardenability are insufficient. And, if the Mn content exceeds 1.35%, deviation in heat treatment performance may occur due to segregation. Therefore, in the present disclosure, the Mn content is limited to 0.95-1.35%.

The content of phosphorus (P) is 0.030% or less (excluding 0%).

P is an element which is segregated in the grain boundary and lowers toughness and delayed fracture resistance. Therefore, in the present disclosure, the upper limit of the P content is limited to 0.030%.

The content of sulfur (S) is 0.030% or less (excluding 0%).

Like P, S is segregated in the grain boundary and lowers toughness. In addition, it hinders hot rolling by forming a low-melting-point emulsion. Therefore, in the present disclosure, the upper limit of the S content is limited to 0.030%.

The content of titanium (Ti) is 0.005-0.030%.

Ti is an element which binds to N introduced into steel to form titanium carbonitride and, thereby, prevents B from binding to N. If the Ti content is less than 0.005%, the effect of B cannot be utilized because it is insufficient to form the N introduced during a steelmaking process into titanium carbonitride. And, if it exceeds 0.030%, the delayed fracture resistance may become inferior due to the formation of coarse carbonitride. Therefore, in the present disclosure, the Ti content is limited to 0.005-0.030%.

The content of boron (B) is 0.0010-0.0040%.

B is an element which improves hardenability. If the B content is less than 0.0010%, it is difficult to expect the improvement of hardenability. And, if it exceeds 0.0040%, the delayed fracture resistance becomes inferior since the austenite grain boundary becomes brittle as Fe₂₃(CB)₆ carbide is formed in the grain boundary. Therefore, in the present disclosure, the B content is limited to 0.0010-0.0040%.

The remaining component of the alloy composition is Fe. But, the wire rod, having improved delayed fracture resistance, for a bolt of the present disclosure may contain other impurities that can be included in common industrial steel production processes. These impurities are well known to those having ordinary knowledge in the art to which the present disclosure belongs, and their types and contents are not specially limited in the present disclosure.

A part, having improved delayed fracture resistance, for a high-strength bolt according to an exemplary embodiment of the present disclosure contains, by wt%, 0.15-0.3% of C, 0.05-0.35% of Si, 0.95-1.35% of Mn, 0.030% or less of P, 0.030% or less of S, Ti: 0.005-0.03%, 0.001-0.004% of B, and Fe and inevitable impurities as the balance, and includes, by volume fraction, 0.3-2.0% of a retained austenite structure and a residual tempered martensite structure.

If the fraction of the retained austenite structure is less than 0.3%, it is difficult to expect the role as a barrier that delays the diffusion of hydrogen. And, if it exceeds 2.0%, the retained austenite is formed thickly not only in the lath boundary but also in the austenite grain boundary, etc., which makes it difficult to delay the diffusion of hydrogen and lowers the effect of improving delayed fracture resistance.

In addition, in the part for a high-strength bolt according to the present disclosure, the retained austenite may be formed in the martensite lath boundary and may have a thickness of 100 nm or smaller. If the thickness of the retained austenite exceeds 100 nm, it may act as a trap wherein hydrogen is accumulated in the retained austenite and may serve as the starting point of hydrogen-induced delayed fracture cracking. Therefore, in the present disclosure, it is preferred that the thickness of the retained austenite is controlled to be 100 nm or smaller.

Next, a method for manufacturing a wire rod and a part, having improved delayed fracture resistance, for a high-strength bolt according to an exemplary embodiment of the present disclosure will be described.

The wire rod and a part, having improved delayed fracture resistance, for a high-strength bolt according to the present disclosure may be manufactured by various methods without particular limitation. As an exemplary embodiment, it may be manufactured by the following method.

The wire rod, having improved delayed fracture resistance, for a high-strength bolt according to the present disclosure may be manufactured by a method including: a step of finish-rolling a steel material containing, by wt%, 0.15-0.3% of C, 0.05-0.35% of Si, 0.95-1.35% of Mn, 0.030% or less of P, 0.030% or less of S, 0.005-0.030% of Ti, 0.001-0.004% of B, and Fe and inevitable impurities as the balance at 880-980 °C; and a step of winding at 830-930 °C.

First, a steel material satisfying the above alloy composition is prepared and finish-rolled at 880-980 °C into a wire rod. Then, the rolled wire rod is wound at 830-930 °C into a coil shape.

If the wire rod rolling temperature is below 880 °C or if the winding temperature is below 830 °C, a decarburized ferrite layer may be formed on the surface through phase transformation because the surface layer is a quasi-two-phase, and the delayed fracture resistance may become inferior since a decarburized ferrite layer is formed also on the surface of the bolt during heat treatment. If the wire rod finish rolling temperature exceeds 980 °C or if the winding temperature exceeds 930 °C, a decarburized ferrite layer may be formed on the surface as decarburization is accelerated by hydrogen.

Then, the wound wire rod may be drawn, spheroidization heat-treated, coated and then formed into a bolt according to the purpose.

The processed wire rod may be austenitized, quenched and then tempered to obtain a final part for a bolt.

A method for manufacturing a part for a bolt according to an exemplary embodiment of the present disclosure includes: an austenitization step of heating the processed wire rod at 870-940 °C; a step of quenching at 50-80 °C; and a step of tempering at 400-600 °C to obtain a part for a bolt.

The austenitization heat treatment may be performed at 870-940 °C. If the heat treatment temperature is below 870 °C, toughness may become inferior as a martensite structure is formed nonuniformly after quenching due to insufficient reverse austenite transformation. If the heat treatment temperature exceeds 940 °C, a martensite lath is formed stably with an increased length during quenching because of the coarse austenite grain size and retained austenite is formed in the lath boundary at a lower fraction than desired in the present disclosure.

The quenching may be performed at 50-80 °C. If the quenching temperature is below 50 °C, fine quenching cracks may occur in the thread of the bolt due to thermal deformation, which can cause delayed fracture. And, if it exceeds 80 °C, retained austenite may be formed in the prior austenite grain boundary in addition to the mechanically stable retained austenite formed in the lath due to insufficient quenching, and delayed fracture may be induced due to accumulation of hydrogen.

The tempering may be performed at 400-600 °C in order to provide strength and toughness according to the use and purpose of the final product. If the tempering temperature is below 400 °C, brittleness may be caused by the tempering. And, if it exceeds 600 °C, it is difficult to achieve the strength desired by the present disclosure.

The part, having improved delayed fracture resistance, for a high-strength bolt manufactured according to the present disclosure includes, by volume fraction, 0.3-2.0% of a retained austenite structure and a microstructure including residual tempered martensite.

In the part, having improved delayed fracture resistance, for a high-strength bolt according to an exemplary embodiment of the present disclosure, retained austenite is formed in the martensite lath boundary and has a thickness of 100 nm or smaller.

Hereinafter, the present disclosure is described in more detail through examples.

### Examples

For evaluation of the delayed fracture resistance of cold heading quality (CHQ) parts of examples and comparative examples, wire rods were prepared into bolts. After fastening the bolt to a structure with a clamping force corresponding to the yield strength and immersing in a solution of 5% hydrochloric acid + 95% distilled water for 10 minutes, the presence of cracks in the thread, which is the part where stress is concentrated, was observed according to the delayed fracture simulation method.

The average volume fraction and thickness of a retained austenite, as the microstructure of a part for a bolt, were measured using five transmission electron microscopic (TEM) images. Because retained austenite with a low fraction of 2.0% or lower could not be observed by X-ray diffraction (XRD), the retained austenite was observed by transmission electron microscopy.

Bolts for final test were prepared from the wire rods of Examples 1-9 and Comparative Examples 1-7 satisfying the alloy composition described in Table 1.

Specifically, the wire rod was finish-rolled at 880-980 °C and wound into a coil shape at 830-930 °C. After austenitizing the wound wire rod at 870-940 °C and quenching at 50-80 °C, a final bolt sample was obtained by tempering at 400-600 °C to ensure a tensile strength of 1050 ± 12 MPa.

**[Table 1]**

| | Alloy composition (wt%) | | | | | | | Residual γ | | Presence of delayed fracture cracks |
|---|---|---|---|---|---|---|---|---|---|---|
| | C | Si | Mn | P | S | Ti | B | Fraction (%) | Thickness (nm) | |
| Ex. 1 | 0.29 | 0.21 | 0.99 | 0.011 | 0.005 | 0.018 | 0.0023 | 0.7 | 97 | X |
| Ex. 2 | 0.16 | 0.20 | 1.30 | 0.012 | 0.005 | 0.019 | 0.0020 | 0.5 | 33 | X |
| Ex. 3 | 0.24 | 0.20 | 1.07 | 0.009 | 0.005 | 0.018 | 0.0021 | 1.2 | 65 | X |
| Ex. 4 | 0.26 | 0.21 | 0.97 | 0.009 | 0.005 | 0.018 | 0.0024 | 0.7 | 84 | X |
| Ex. 5 | 0.21 | 0.20 | 1.11 | 0.010 | 0.005 | 0.018 | 0.0023 | 1.3 | 48 | X |
| Ex. 6 | 0.22 | 0.33 | 1.09 | 0.011 | 0.005 | 0.019 | 0.0021 | 1.2 | 51 | X |
| Ex. 7 | 0.23 | 0.20 | 0.96 | 0.013 | 0.005 | 0.018 | 0.0020 | 0.6 | 55 | X |
| Ex. 8 | 0.18 | 0.21 | 1.20 | 0.009 | 0.005 | 0.018 | 0.0023 | 1.7 | 43 | X |
| Ex. 9 | 0.20 | 0.20 | 1.00 | 0.011 | 0.005 | 0.019 | 0.0022 | 0.7 | 40 | X |
| Comp. Ex. 1 | 0.14 | 0.20 | 1.20 | 0.012 | 0.005 | 0.018 | 0.0023 | 0 | - | ○ |
| Comp. Ex. 2 | 0.32 | 0.22 | 1.15 | 0.013 | 0.005 | 0.018 | 0.0021 | 1.4 | 122 | ○ |
| Comp. Ex. 3 | 0.25 | 0.44 | 1.15 | 0.010 | 0.005 | 0.019 | 0.0020 | 1.5 | 88 | ○ |
| Comp. Ex. 4 | 0.20 | 0.20 | 0.85 | 0.009 | 0.005 | 0.018 | 0.0021 | 0 | - | ○ |
| Comp. Ex. 5 | 0.21 | 0.20 | 1.40 | 0.010 | 0.005 | 0.018 | 0.0022 | 2.2 | 55 | ○ |
| Comp. Ex. 6 | 0.22 | 0.21 | 1.15 | 0.031 | 0.005 | 0.018 | 0.0021 | 1.4 | 85 | ○ |
| Comp. Ex. 7 | 0.24 | 0.22 | 1.02 | 0.009 | 0.005 | 0.018 | 0.0004 | 0.2 | 51 | ○ |

For Examples 1-9, retained austenite (γ) showed a fraction of 0.3-2.0% and a thickness of 100 nm or smaller and no delayed fracture crack was observed. For Comparative Example 1, wherein the C content did not satisfy the lower limit 0.15% of the present disclosure as 0.14%, delayed fracture cracks were observed as the retained austenite did not act as a barrier of diffusion of hydrogen.

For Comparative Example 2, wherein the C content did not satisfy the upper limit 0.30% of the present disclosure as 0.32%, the retained austenite had a thickness exceeding 100 nm and delayed fracture cracking was induced as the retained austenite acted as a trap wherein hydrogen was trapped.

For Comparative Example 3, wherein the Si content exceeded the upper limit 0.35% of the present disclosure as 0.44%, delayed fracture cracking was induced.

For Comparative Example 4, wherein the Mn content did not reach the lower limit 0.95% of the present disclosure as 0.85%, retained austenite was not formed due to insufficient quenching and, thus, delayed fracture occurred.

For Comparative Example 5, wherein the Mn content exceeded the upper limit 1.35% of the present disclosure as 1.40%, the fraction of retained austenite was high and delayed fracture cracking occurred. For Comparative Example 5, although the thickness of retained austenite satisfied the requirement of 100 nm or smaller proposed by the present disclosure, the fraction of retained austenite exceeded the upper limit 2.0% proposed by the present disclosure as 2.2%. Therefore, when the bolt was fastened at the yield strength, the delayed fracture resistance was inferior due to the formation of transformation-induced martensite.

For Comparative Example 6, wherein the P content exceeded the upper limit 0.030% proposed by the present disclosure as 0.031%, delayed fracture cracking occurred due to decreased grain boundary binding energy caused by the segregation of P in the prior austenite grain boundary.

For Comparative Example 7, wherein the B content did not reach the lower limit 0.001% proposed by the present disclosure as 0.0004%, the fraction of retained austenite was lower than 0.3% due to insufficient quenching and delayed fracture occurred.

In addition, final bolt samples of Example 3 and Comparative Examples 8-1 to 8-4 were prepared under to the conditions described in Table 2.

**[Table 2]**

| | Temperature (°C) | | | Residual γ | | Presence of delayed fracture cracks |
|---|---|---|---|---|---|---|
| | Finish rolling temperature | Winding temperature | Austenitization temperature | Fraction (%) | Thickness (nm) | |
| Ex. 3 | 930 | 880 | 910 | 1.2 | 65 | X |
| Comp. Ex. 8-1 | 990 | 940 | 910 | 0.2 | 49 | ○ |
| Comp. Ex. 8-2 | 870 | 820 | 910 | 2.4 | 77 | ○ |
| Comp. Ex. 8-3 | 930 | 880 | 950 | 0.2 | 50 | ○ |
| Comp. Ex. 8-4 | 930 | 880 | 860 | 3.1 | 80 | ○ |

For Example 3, wherein the finish rolling temperature, winding temperature and austenitization temperature according to the present disclosure were satisfied, the fraction and thickness of retained austenite proposed by the present disclosure were satisfied and no delayed fracture cracking occurred. FIG. 1 is the transmission electron microscopic (TEM) image showing the fraction and thickness of retained austenite of Example 3. From FIG. 1, it can be seen that retained austenite was formed in the martensite lath boundary for Example 3 prepared according to the present disclosure. For Comparative Example 8-1, wherein the finish rolling temperature exceeded the upper limit 980 °C proposed by the present disclosure and the winding temperature exceeded the upper limit 930 °C, the final bolt had a coarse prior austenite grain size and delayed fracture occurred because the fraction of retained austenite did not reach 0.3%.

For Comparative Example 8-2, wherein the finish rolling temperature did not reach the lower limit 880 °C proposed by the present disclosure and the winding temperature did not reach the lower limit 830 °C, the fraction of retained austenite exceeded 2.0% as the prior austenite grain size of the final bolt was decreased and delayed fracture occurred.

For Comparative Example 8-3, wherein the austenitization heat treatment temperature was higher than the upper limit 940 °C proposed by the present disclosure as 950 °C, the fraction of retained austenite was lower than 0.3% due to the increased prior austenite grain size of the final bolt and delayed fracture occurred.

For Comparative Example 8-4, wherein the austenitization heat treatment temperature was lower than the lower limit 870 °C proposed by the present disclosure as 860 °C, the fraction of retained austenite exceeded 2.0% due to the decreased prior austenite grain size of the final bolt and delayed fracture occurred.

Although the exemplary embodiments of the present disclosure were described, the present disclosure is not limited thereto and those having ordinary knowledge in the art will understand that various changes and modifications without departing from the concept and scope of the appended claims.

## Claims

1. A wire rod, having improved delayed fracture resistance, for a high-strength bolt, comprising, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance.

2. A part, having improved delayed fracture resistance, for a high-strength bolt, comprising, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance, and comprising, by volume fraction, 0.3-2.0% of a retained austenite structure and a residual tempered martensite structure.

3. The part for a high-strength bolt according to claim 2, wherein the retained austenite is formed at a martensite lath boundary and has a thickness of 100 nm or smaller.

4. A method for manufacturing a wire rod, having improved delayed fracture resistance, for a high-strength bolt, comprising:
a step of finish-rolling a steel material comprising, by wt%, 0.15-0.30% of C, 0.05-0.35% of Si, 0.95-1.35% of Mn, 0.030% or less of P, 0.030% or less of S, 0.005-0.030% of Ti, 0.0010-0.0040% of B, and Fe and inevitable impurities as the balance at 880-980 °C; and
a step of winding at 830-930 °C.

5. A method for manufacturing a part, having improved delayed fracture resistance, for a high-strength bolt, comprising:
a step of forming the wire rod for a high-strength bolt according to claim 1 into a part;
an austenitization step of heating at 870-940 °C;
a step of quenching at 50-80 °C; and
a step of obtaining a part by tempering at 400-600 °C.
